# EUROPÄISCHE PATENTSCHRIFT

(11) **EP 3 237 105 B1**
(45) Veröffentlichungstag und Bekanntmachung des Hinweises auf die Patenterteilung: **26.06.2019**
(21) Anmeldenummer: 15820830.6
(22) Anmeldetag: 17.12.2015
(51) Int. Cl.: B01J 8/02, C01B 21/28

(54) **VERFAHREN ZUR ANORDNUNG EINER SCHÜTTUNG IN EINEM BRENNER UND BRENNERKORB FÜR EINEN BRENNER**
METHOD FOR ARRANGING A PACKING IN A BURNER AND BURNER BASKET FOR A BURNER
PROCÉDÉ D'AGENCEMENT D'UN LIT DANS UN BRÛLEUR ET PANIER DE BRÛLEUR POUR BRÛLEUR

(30) Priorität: 22.12.2014 DE 102014226791
(43) Veröffentlichungstag der Anmeldung: 01.11.2017
(73) Patentinhaber: thyssenkrupp Industrial Solutions AG, 45143 Essen (DE); thyssenkrupp AG, 45143 Essen (DE)
(72) Erfinder: FUCHS, Jürgen, 44139 Dortmund (DE); RUTHARDT, Klaus, 44265 Dortmund (DE); SIEFERT, Rolf, 33378 Rheda-Wiedenbrück (DE)
(74) Vertreter: thyssenkrupp Intellectual Property GmbH
(86) Internationale Anmeldenummer: PCT/EP2015/080315
(87) Internationale Veröffentlichungsnummer: WO 2016/102324

(56) Entgegenhaltungen:
- EP-A1- 1 022 056
- WO-A1-99/20384
- WO-A1-2005/018792
- WO-A1-2013/034303

## Beschreibung

### Stand der Technik

Die vorliegende Erfindung betrifft ein Verfahren zur Anordnung einer aus Partikeln bestehenden Schüttung in einem von einem Gas durchströmbaren Brenner, insbesondere in einem Brennerkorb eines Ammoniak-Oxidationsbrenners. Ferner betrifft die Erfindung einen Brennerkorb für einen Brenner, insbesondere für einen Ammoniak-Oxidationsbrenner, mit einer aus Partikeln bestehenden Schüttung.

Derartige Brenner werden beispielsweise als Ammoniak-Oxidationsbrenner bei der Synthese von Salpetersäure verwendet. Hierbei werden in dem Ammoniak-Oxidationsbrenner Ammoniak (NH₃) und Sauerstoff (O₂) katalytisch zu Stickstoffmonoxid (NO) und Wasser (H₂O) umgesetzt. Das erhaltene NO wird dann zur Salpetersäureherstellung weiterverwendet.

Als Katalysatoren werden in Ammoniak-Oxidationsbrennern üblicherweise Platin/Rhodium-Netze eingesetzt, welche auf einer aus Partikeln bestehenden Schüttung platziert werden. Die Partikel sind in der Regel als Füllkörper aus Steinzeug, Glas, Porzellan oder Edelstahl ausgebildet und in einen innerhalb des Brenners angeordneten Brennerkorb eingebracht. Der Brennerkorb weist üblicherweise eine gasdurchlässige Bodenplatte auf, so dass das in den Brenner eingeleitete NH₃ durch den Brennerkorb und die Schüttung strömen kann.

Die Oxidation von Ammoniak in dem Brenner erfordert eine Betriebstemperatur von ca. 890 °C bei einem Druck von ca. 10 bar. Aufgrund der hohen Temperatur dehnt sich der Brennerkorb bei Betrieb des Ammoniak-Oxidationsbrenners aus. Es ist dabei zu beobachten, dass sich die Bodenplatte des Brennerkorbs im Vergleich zu den Seitenwänden des Brennerkorbs verzögert ausdehnt. Bei wiederholtem Anfahren und Abfahren des Ammoniak-Oxidationsbrenners entstehen aufgrund dieses unterschiedlichen Ausdehnungsverhaltens von Seitenwänden und Bodenplatte des Brennerkorbs im Randbereich des Brennerkorbs Hohlräume und Spalten in der Schüttung. Durch diese Zerstörung der Schüttungsstruktur wird der Strömungswiderstand für das durchströmende NH₃ reduziert und die Katalysatornetze werden nicht mehr gleichmäßig von der Schüttung gestützt. Diese Phänomene verursachen einen Verlust an Verbrennungseffizienz und einen Ammoniakschlupf.

Ein Brennerkorb für Ammoniak-Oxidationsbrenner, der eine gasdurchlässige Bodenplatte aufweist, auf welcher sich eine weitere gasdurchlässige Struktur befindet, ist u.a. aus WO 2013/034303 und WO 2005/018792 bekannt.

### Offenbarung der Erfindung

Die Aufgabe der vorliegenden Erfindung ist es, die Verbrennungseffizienz zu erhöhen und den Ammoniakschlupf zu reduzieren.

Die Aufgabe wird gelöst durch ein Verfahren gemäß Anspruch 1 zur Anordnung einer aus Partikeln bestehenden Schüttung in einem von einem Gas durchströmbaren Brenner, insbesondere in einem Brennerkorb eines Ammoniak-Oxidationsbrenners, wobei die Partikel derart angeordnet werden, dass die Schüttung in einem Randbereich des Brenners einen größeren Strömungswiderstand aufweist als in einem Innenbereich des Brenners.

Zur Lösung der Aufgabe wird ferner ein Brennerkorb gemäß Anspruch 15 für einen Brenner, insbesondere für einen Ammoniak-Oxidationsbrenner, vorgeschlagen, mit einer aus Partikeln bestehenden Schüttung, wobei die Partikel derart angeordnet sind, dass die Schüttung in einem Randbereich des Brennerkorbs einen größeren Strömungswiderstand aufweist als in einem Innenbereich des Brennerkorbs.

Die Anordnung der Partikel wird derart gewählt, dass die Schüttung in dem für eine Hohlraum- und/oder Spaltenbildung anfälligen Randbereich des Brenners einen gegenüber dem Innenraum erhöhten Strömungswiderstand aufweist. Das durchströmende Gas wird vermehrt durch den Innenbereich des Reaktors geleitet, so dass im Randbereich vorhandene Hohlräume nur wenig mit durchströmendem Gas beaufschlagt werden und sich die Erstehung und Aufweitung von Hohlräumen und Spalten im Randbereich verringert. Die Zerstörung der Schüttgutstruktur aufgrund des unterschiedlichen Ausdehnungsverhaltens von Seitenwänden und Bodenplatte infolge von Temperaturschwankungen wird begrenzt, so dass sich die Verbrennungseffizienz erhöht und der Ammoniakschlupf reduziert.

Bevorzugt weist die Schüttung im Randbereich eine größere Schüttdichte als im Innenbereich auf. Durch die im Randbereich größere Schüttdichte, d.h. die im Randbereich größere Masse der Partikel pro Volumeneinheit, wird der für das Durchströmen des Gases erforderliche Freiraum zwischen den Partikeln im Randbereich verringert und der Strömungswiderstand im Randbereich erhöht. Die höhere Schüttdichte trägt dazu bei, dass die Bewegungsfreiheit der Partikel im Randbereich eingeschränkt wird, so dass die Bildung von Hohlräumen und/oder Spalten aufgrund der Ausdehnung des Brennerkorbs verringert wird. Im Innenbereich wird die Schüttdichte bevorzugt so eingestellt, dass sie geringer als im Randbereich ist.

Eine vorteilhafte Ausgestaltung sieht vor, dass die Schüttung Kleinpartikel und Großpartikel umfasst, wobei die Kleinpartikel einen kleineren Durchmesser aufweisen als die Großpartikel. Durch die Verwendung von Partikeln mit unterschiedlichem Durchmesser lässt sich der Strömungswiderstand der Schüttung einstellen. Es können Bereiche gebildet werden, die im Wesentlichen Kleinpartikel aufweisen, um einen hohen Strömungswiderstand einzustellen und Bereiche, die im Wesentlichen Großpartikel aufweisen, um einen niedrigen Strömungswiderstand einzustellen. Ferner können die Kleinpartikel und Großpartikel zur Einstellung des Strömungswiderstands gemischt werden.

In diesem Zusammenhang hat es sich als besonders vorteilhaft herausgestellt, wenn die Kleinpartikel einen Durchmesser im Bereich von 1 mm bis 10 mm, bevorzugt im Bereich von 2 mm bis 5 mm, aufweisen. Eine Schüttung aus Kleinpartikeln mit Durchmessern in dem genannten Bereich weist einen hohen Strömungswiderstand auf.

Bevorzugt weisen die Großpartikel einen Durchmesser im Bereich von 5 mm bis 50 mm, bevorzugt im Bereich von 10 mm bis 40 mm, besonders bevorzugt im Bereich von 20 mm bis 30 mm auf. Eine Schüttung aus Großpartikeln mit Durchmessern in dem genannten Bereich weist einen geringen Strömungswiderstand auf.

Das Verhältnis des Durchmessers der Kleinpartikel zu dem Durchmesser der Großpartikel liegt bevorzugt im Bereich von 1/50 bis 1, besonders bevorzugt im Bereich von 1/50 bis 1/25.

Eine bevorzugte Ausgestaltung sieht vor, dass im Randbereich mehr Kleinpartikel als Großpartikel angeordnet werden und/oder im Innenbereich mehr Großpartikel als Kleinpartikel angeordnet werden. Durch die Überzahl der Kleinpartikel im Randbereich wird die Schüttdichte und der Strömungswiderstand im Randbereich erhöht. Die Überzahl von Großpartikeln in dem Innenbereich verringert den Strömungswiderstand im Innenbereich. Besonders bevorzugt sind im Randbereich im Wesentlichen Kleinpartikel und/oder im Innenbereich im Wesentlichen Großpartikel angeordnet, so dass sich im Randbereich ein Maximum des Strömungswiderstands und/oder im Innenbereich ein Minimum des Strömungswiderstands ergibt.

Gemäß einer alternativen Ausgestaltung ist vorgesehen, dass im Randbereich mehr Kleinpartikel als Großpartikel angeordnet werden und im Innenbereich zwei Schichten angeordnet werden, wobei die untere Schicht mehr Kleinpartikel als Großpartikel aufweist und die obere Schicht mehr Großpartikel als Kleinpartikel aufweist. Durch eine derartige Anordnung der Partikel kann die Stabilität der Schüttungsstruktur nochmals verbessert werden.

Eine weitere alternative Ausgestaltung sieht vor, dass im Randbereich eine Mischung aus Kleinpartikeln und Großpartikeln angeordnet wird, so dass durch das Mischungsverhältnis der Kleinpartikel und Großpartikel der Strömungswiderstand in dem Randbereich eingestellt wird. Die Einstellung des Mischverhältnisses kann durch einen Mischapparat erfolgen, welchem Kleinpartikel und Großpartikel separat zugeführt werden. Bevorzugt ist die Anzahl von Großpartikeln und Kleinpartikeln in der Mischung im Wesentlichen gleich.

Bevorzugt ist es, wenn im Randbereich übereinanderliegende Schichten aus Großpartikeln und aus Kleinpartikeln angeordnet werden. Großpartikel und Kleinpartikel können abwechselnd in den Randbereich eingebracht werden.

Die Breite des Randbereichs weist bevorzugt einen Wert im Bereich von 1 % bis 6 % des Durchmessers des Brenners und/oder des Durchmessers des Brennerkorbs auf. Vorteilhafterweise liegt die Breite des Randbereichs im Bereich von 5 cm bis 30 cm, bevorzugt im Bereich von 10 cm bis 20 cm.

Gemäß einer vorteilhaften Ausgestaltung wird auf einer Bodenplatte des Brenners oder des Brennerkorbs, ein gasdurchlässiges Trennmaterial angeordnet, auf welches die Schüttung aufgebracht wird. Das gasdurchlässige Trennmaterial verhindert ein Durchrutschen der Partikel der Schüttung durch etwaige Öffnungen in der Bodenplatte des Brennerkorbs und/oder durch etwaige Spalte zwischen der Bodenplatte und der Seitenwand des Brennerkorbs.

Eine Trennvorrichtung wird in den Brennerkorb eingebracht, welche den Randbereich von dem Innenbereich trennt.

Durch die Trennvorrichtung kann verhindert werden, dass sich die Partikel des Randbereichs ungewollt mit den Partikeln des Innenbereichs vermischen. Bevorzugt wird die Trennvorrichtung in den Brenner oder den Brennerkorb eingebracht, bevor die Partikel der Schüttung in dem Randbereich und/oder in dem Innenbereich angeordnet werden.

Als bevorzugt hat es sich erwiesen, wenn zwischen den Randbereich und den Innenbereich ein gasdurchlässiges Trennmaterial, insbesondere ein Netz, eingebracht wird. Durch das gasdurchlässige Trennmaterial kann verhindert werden, dass sich die in den Randbereich und den Innenbereich eingebrachten Partikel vermischen. Das gasdurchlässige Trennmaterial wird bevorzugt in dem Brenner, insbesondere dem Brennerkorb angeordnet, bevor die Schüttung eingebracht wird. Besonders bevorzugt ist das Trennmaterial derart ausgebildet, dass es für Kleinpartikel und Großpartikel nicht durchlässig ist. Das gasdurchlässige Trennmaterial kann lose in den Brenner, insbesondere in den Brennerkorb, eingebracht werden oder verankert werden, beispielsweise mit der Bodenplatte des Brennerkorbs und/oder mit einem auf der Bodenplatte aufliegenden Trennmaterial. Bevorzugt ist es ferner, wenn das gasdurchlässige Trennmaterial elastisch ist, so dass es sich bei Bewegungen der Partikel verformen kann. Das gasdurchlässige Trennmaterial, welches zwischen den Randbereich und den Innenbereich eingebracht wird, kann aus demselben Material ausgebildet sein, wie das gasdurchlässige Trennmaterial, welches auf der Bodenplatte angeordnet ist. Das den Randbereich und den Innenbereich trennende Trennmaterial verbleibt während des Betriebs des Brenners in dem Brenner.

Vorteilhaft ist es, wenn der Randbereich einen rechteckigen, insbesondere quadratischen, Querschnitt aufweist. Durch den rechteckigen, insbesondere quadratischen, Querschnitt kann die Stabilität der Struktur der Schüttung im Randbereich erhöht werden und der Bildung von Mulden, Hohlräumen und/oder Spalten entgegengewirkt werden.

Eine alternative Ausgestaltung sieht vor, dass der Randbereich einen trapezförmigen Querschnitt aufweist. Ein trapezförmiger Randbereich ist bei solchen Brennern und/oder Brennerkörben von Vorteil, welche kegelförmig ausgebildet sind. Das Trapez kann sich nach oben oder unten verjüngend ausgebildet sein.

Die Partikel der Schüttung können als Füllkörper ausgebildet sein, beispielsweise als Raschig-Ringe, Pall-Ringe, Berl-, Interlox oder Torussättel und/oder Interpackkörper. Das Material der Füllkörper ist bevorzugt Steinzeug, Porzellan, Glas oder Edelstahl. Alternativ oder zusätzlich können die Partikel der Schüttung einen Katalysator aufweisen. Die Schüttung kann insofern einen sekundären Katalysator bilden, wodurch sich der Wirkungsgrad der katalytischen Reaktion erhöht. Beispielsweise können die Partikel als Füllkörper ausgebildet sein, die mit einem Katalysator imprägniert sind oder als aus einem katalysatorhaltigen Material gebildete Partikel. Es ist möglich, eine Mischung aus solchen Partikeln zu verwenden, die aus einem nicht-katalysatorhaltigen Material ausgebildet sind und solchen Partikeln, die aus einem katalysatorhaltigen Material ausgebildet sind.

Die vorstehend beschriebenen vorteilhaften Merkmale können sowohl bei dem erfindungsgemäßen Verfahren als auch bei dem erfindungsgemäßen Brennerkorb allein oder in Kombination Verwendung finden.

Weitere Einzelheiten, Merkmale und Vorteile der Erfindung ergeben sich aus den Zeichnungen 2, 7, 8c und 9c, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt eine erste Ausgestaltung eines Brennerkorbs in einer schematischen Schnittdarstellung.
Die **Fig. 2** zeigt eine zweite Ausgestaltung eines erfindungsgemäßen Brennerkorbs in einer schematischen Schnittdarstellung.
Die **Fig. 3** zeigt eine dritte Ausgestaltung eines Brennerkorbs in einer schematischen Schnittdarstellung.
Die **Fig. 4** zeigt eine vierte Ausgestaltung eines Brennerkorbs in einer schematischen Schnittdarstellung.
Die **Fig. 5** zeigt eine fünfte Ausgestaltung eines Brennerkorbs in einer schematischen Schnittdarstellung.
Die **Fig. 6** zeigt eine sechste Ausgestaltung eines Brennerkorbs in einer schematischen Schnittdarstellung.
Die **Fig. 7** zeigt eine siebte Ausgestaltung eines erfindungsgemäßen Brennerkorbs in einer schematischen Schnittdarstellung.
Die **Fign. 8a****-c** zeigen einen Brennerkorb gemäß Fig. 1 in verschieden Zuständen zur Veranschaulichung einer ersten Ausgestaltung des erfindungsgemäßen Verfahrens zur Anordnung der Schüttung.
Die **Fign. 9a****-c** zeigen einen Brennerkorb gemäß Fig. 2 in verschieden Zuständen zur Veranschaulichung einer zweiten Ausgestaltung des erfindungsgemäßen Verfahrens zur Anordnung der Schüttung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt. Bei den Zeichnungen handelt es sich um schematische Darstellungen, die der Illustration grundlegender Zusammenhänge dienen. Die Darstellungen sind weder maßstabsgetreu noch geben sie die beschriebenen Größenverhältnisse korrekt wieder.

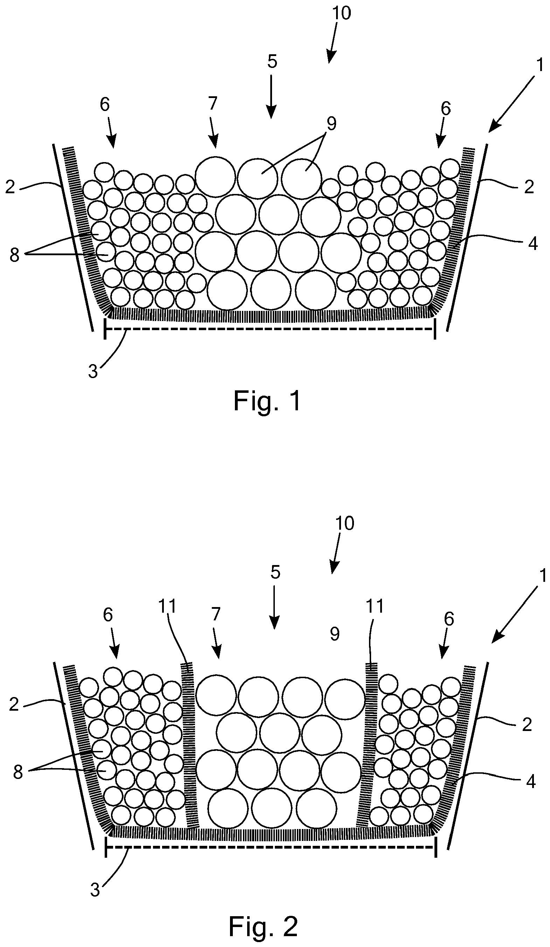

In der **Fig. 1** ist ein nicht erfindungsgemässer Brennerkorb 1 eines als Ammoniak-Oxidationsbrenner ausgebildeten Brenners 10 dargestellt, mittels welchem Ammoniak und Sauerstoff katalytisch zu Stickstoffmonoxid und Wasser umgesetzt werden. Der Brennerkorb 1 weist eine im Wesentlichen kegelförmige Form auf und ist bei Betrieb des Brenners 10 im Innenraum des Brenners 10 angeordnet, so dass er von Ammoniak und Sauerstoff durchströmt werden kann. Der Brennerkorb 1 ist aus einer gasdurchlässigen Bodenplatte 3 und Seitenwänden 2 gebildet. Bei dem vorliegenden Ausführungsbeispiel sind die gasdurchlässige Bodenplatte 3 und die Seitenwände 2 unabhängig voneinander in dem Brenner befestigt und nicht unmittelbar miteinander verbunden. Insofern besteht ein Spalt zwischen der gasdurchlässigen Bodenplatte 3 und den Seitenwänden 2. Oberhalb der Bodenplatte 3 ist ein gasdurchlässiges Trennmaterial 4 angeordnet, welches den Durchtritt von Ammoniak und Sauerstoff ermöglicht und gleichzeitig das Durchfallen von Partikeln durch den Spalt zwischen Bodenplatte 3 und Seitenwänden 2 oder durch die Bodenplatte 3 verhindert.

Innerhalb des Brennerkorbs 1 befindet sich eine Schüttung 5 aus Partikeln, welche als Füllkörper 8, 9 ausgebildet sind. Die Füllkörper 8, 9 sind in den Figuren vereinfacht als im Wesentlichen kugelförmige Partikel dargestellt, können aber abweichend von der Darstellung in den Figuren Partikel mit beliebiger vorgegebener Form, beispielsweise als Raschig-Ringe, Pall-Ringe, Berl-, Interlox- oder Torussättel und/oder Interpackkörper ausgebildet sein. Das Material der Füllkörper ist bevorzugt Steinzeug, Porzellan, Glas oder Edelstahl. Oberhalb der Schüttung 5 kann ein in den Figuren nicht dargestelltes Katalysatornetz, beispielsweise ein Platin/Rhodium-Katalysatornetz, angeordnet werden. Optional können die Partikel ein Katalysatormaterial aufweisen, so dass die katalytische Wirkung verbessert wird.

Um die Verbrennungseffizienz zu erhöhen und den Ammoniakschlupf zu reduzieren, sind die Partikel 8, 9 derart angeordnet, dass die Schüttung 5 in einem Randbereich 6 des Brennerkorbs 1 einen größeren Strömungswiderstand aufweist als in einem Innenbereich 7 des Brennerkorbs 1. Infolge des erhöhten Strömungswiderstands im Randbereich 7 wird das Gemisch aus Ammoniak und Sauerstoff vermehrt durch den Innenbereich 7 des Brennerkorbs 1 geleitet. Die Schüttung 5 weist im Randbereich 6 eine größere Schüttdichte auf als im Innenbereich 7. Die höhere Schüttdichte im Randbereich 6 trägt dazu bei, dass die Bewegungsfreiheit der Partikel 8 im Randbereich 6 eingeschränkt wird, so dass die Bildung von Hohlräumen und/oder Spalten aufgrund von thermisch bedingten Ausdehnungen der Bodenplatte 3 und/oder der Seitenwände 2 verringert wird.

Wie der Darstellung in Fig. 1 ferner zu entnehmen ist, umfasst die Schüttung 5 Kleinpartikel 8 und Großpartikel 9, wobei die Kleinpartikel 8 kleiner als die Großpartikel 9 ausgebildet sind. Der Durchmesser der Kleinpartikel 8 liegt im Bereich von 1 mm bis 10 mm und ist kleiner als der Durchmesser der Großpartikel 10, welcher im Bereich von 5 mm bis 50 mm liegt.

Im Randbereich 6 des Brennerkorbs 1 sind im Wesentlichen Kleinpartikel 8 angeordnet, während im Innenbereich 7 im Wesentlichen Großpartikel angeordnet sind. Insofern befindet sich im Randbereich 6 eine Überzahl an Kleinpartikeln und im Innenbereich 7 eine Überzahl an Großpartikeln. Der Randbereich 6 weist eine Breite auf, die zwischen 1% und 6% des Durchmessers des Brenners beträgt.

In der **Fig. 2** ist ein Ausführungsbeispiel eines erfindungsgemäßen Brennerkorbs 1 dargestellt. Im Grunde ist der Brennerkorb 1 ähnlich wie der Brennerkorb der Figur 1 aufgebaut, so dass das dort gesagt auch für das Ausführungsbeispiel gilt. Im Unterschied zu dem Brennerkorb 1 der Figur 1 weist der Brennerkorb 1 gemäß Fig. 2 zusätzlich ein gasdurchlässiges Trennmaterial 11 auf, welches zwischen dem Randbereich 6 und dem Innenbereich 7 angeordnet ist. Das gasförmige Trennmaterial 11 ist als elastisches Netz ausgebildet, welches sich bei der Ausdehnung des Brennerkorb 1 infolge seiner Erwärmung verformen kann, so dass eine Beschädigung des gasförmigen Trennmaterials 11 durch die Bewegung der Partikel 8, 9 icht zu befürchten ist.

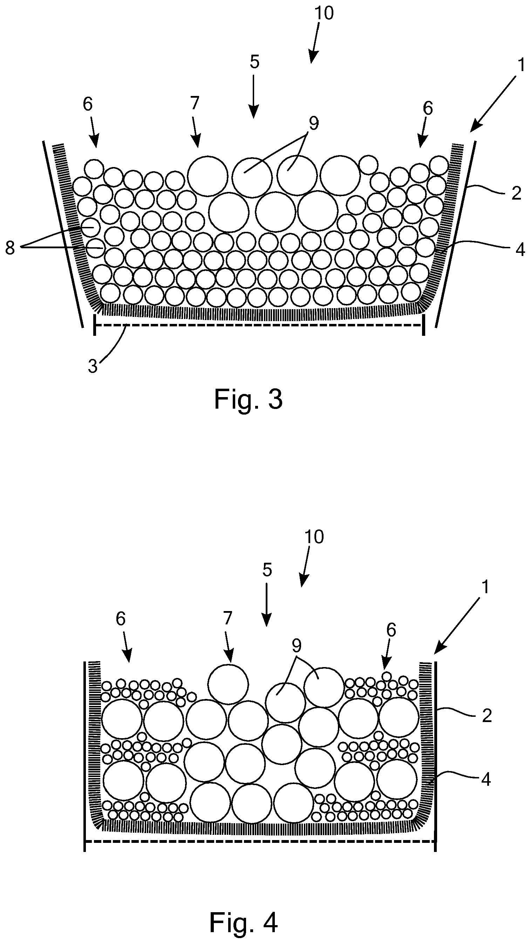

Gemäß Fig. 3 sind im Innenbereich 7 zwei Schichten angeordnet, wobei die untere Schicht mehr Kleinpartikel 8 als Großpartikel 9 aufweist und die obere Schicht mehr Großpartikel 9 als Kleinpartikel 8 aufweist. Im Randbereich 6 sind mehr Kleinpartikel 8 als Großpartikel 9 angeordnet. Hierdurch ergibt sich eine gegenüber der Schüttung 5 des ersten Ausführungsbeispiels verbesserte Stabilität der Schüttung 5.

Im Gegensatz zu den vorhergehenden Beispielen weist der Brennerkorb 1 gemäß Fig. 4 eine zylindrische Grundform auf. Die Seitenwände 2 sind im Wesentlichen im rechten Winkel zu der Bodenplatte 3 angeordnet. Zudem sind die Seitenwände 2 unmittelbar mit der Bodenplatte 3 verbunden.

Da die Seitenwände 2 im Wesentlichen vertikal verlaufen, weist der Randbereich 6 einen rechteckigen, insbesondere quadratischen, Querschnitt auf. Im Randbereich 6 ist eine Mischung aus Kleinpartikeln 8 und Großpartikeln 9 angeordnet. Die Partikel 8, 9 der Schüttung 5 sind im Randbereich 6 in Schichten angeordnet, welches jeweils im Wesentlichen Kleinpartikel 8 oder Großpartikel 9 aufweisen.

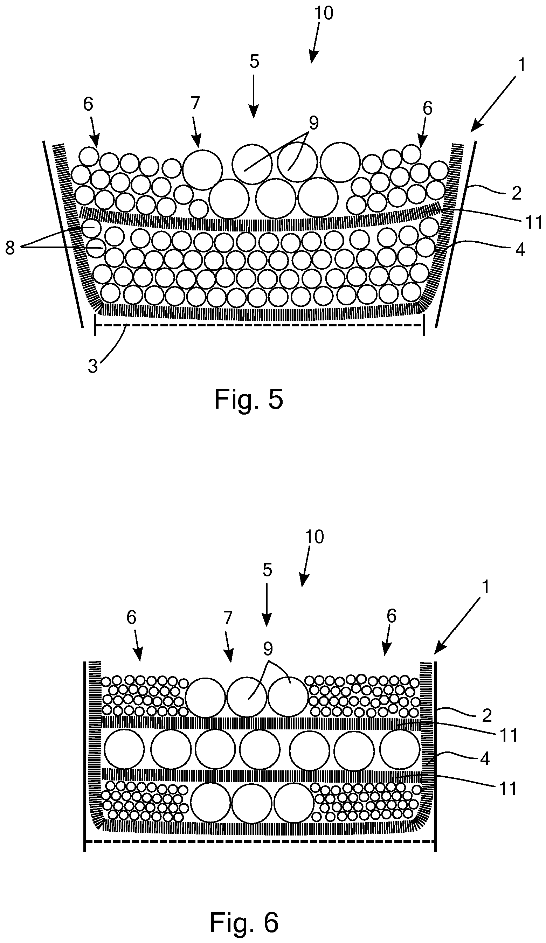

In der **Fig. 5** ist ein fünftes Ausführungsbeispiel eines Brennerkorbs 1 gezeigt. Der Brennerkorb 1 entspricht im Wesentlichen dem in Fig. 3 gezeigten Brennerkorb 1 mit dem Unterschied, dass zur Trennung der Großpartikel 9 von den Kleinpartikeln 8 ein als Trennnetz ausgebildetes Trennmaterial 11 eingebracht ist. Das Trennmaterial 11 ist zwischen einer aus Kleinpartikeln 8 bestehenden unteren Schicht und einer aus Großpartikeln 9 bestehenden oberen Schicht angeordnet.

Die **Fig. 6** zeigt ein sechstes Ausführungsbeispiel eines Brennerkorbs 1, welcher im Wesentlichen dem im Fig. 4 dargestellten Brennerkorb 1 entspricht. Zur Trennung der Großpartikel 9 von den Kleinpartikeln 8 sind mehrere als Trennnetze ausgebildete Trennmaterialen 11 in den Brennerkorb 1 eingebracht. Die Trennnetze sind im Wesentlichen horizontal angeordnet und trennen eine aus Großpartikeln 9 bestehende Schicht von den angrenzenden Schichten, in welchen Großpartikel 9 und Kleinpartikel 8 enthalten sind.

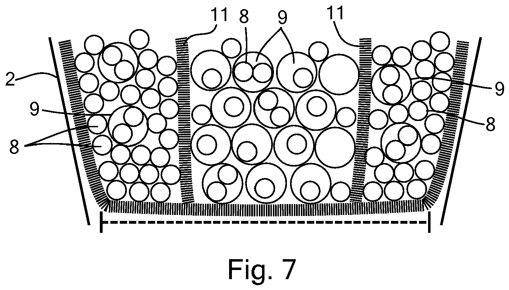

Die Darstellung in **Fig. 7** zeigt ein siebtes Ausführungsbeispiel eines Brennerkorbs 1, welcher eine Schüttung 5 aufweist, die im Randbereich 6 einen gegenüber dem Innenbereich 7 vergrößerten Strömungswiderstand aufweist. Hierzu ist im Brennerkorbs 1 eine Mischung aus Kleinpartikeln 8 und Großpartikeln 9 eingebracht, wobei im Randbereich 6 weniger Großpartikel 9 pro Volumeneinheit angeordnet sind als im Innenbereich 7, so dass sich im Randbereich 6 eine Mischung mit höherer Schüttdichte ergibt. Die Anzahl an Kleinpartikeln 8 pro Volumeneinheit ist im Randbereich 6 größer als im Innenbereich 7.

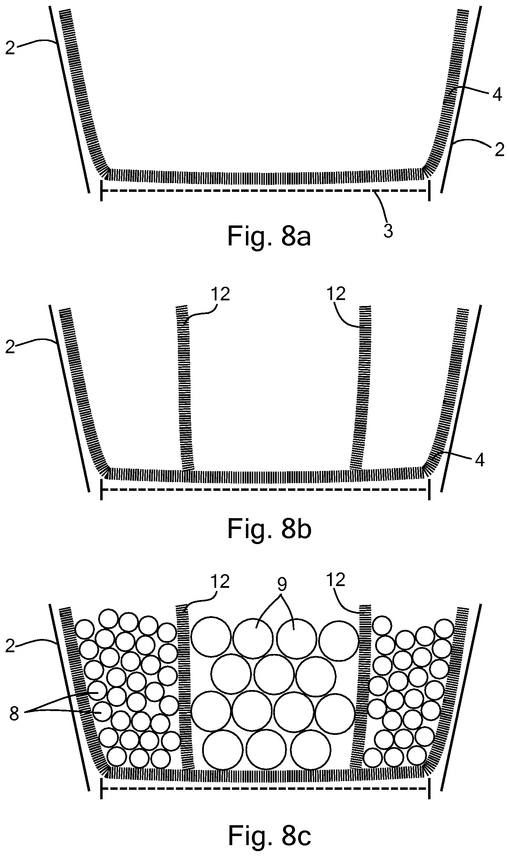

Die Kleinpartikel 8 sind aus einem Katalysatormaterial gebildet, während die Großpartikel 9 aus Keramik bestehen. Die Großpartikel 9 sind als Raschig-Ringe ausgestaltet. Die Größe der Raschig-Ringe ist derart gewählt, dass die Kleinpartikel 8 in den von den Raschig-Ringen gebildeten zylindrischen Hohlraum eindringen können. Dies bringt den Vorteil mit sich, dass die Kleinpartikel 8 von den als Raschig-Ringen ausgebildeten Großpartikeln 9 im Randbereich 6 gehalten werden, so dass die Gefahr des Verblasens der Kleinpartikel 8 aus dem Randbereich 6 in Richtung des Innenbereichs 7 reduziert ist. Zwischen dem Randbereich 6 und dem Innenbereich 7 sind zusätzlich Trennnetze 11 aus einem gasdurchlässigen Material angeordnet, so dass ein ungewolltes Wandern der Kleinpartikel 8 aus dem Randbereich 6 in den Innenbereich 7 erschwert wird.
Eine erste Ausgestaltung des erfindungsgemäßen Verfahrens zur Anordnung einer Schüttung 5 in einem von einem Gas durchströmbaren Brenner 10 soll nachfolgend anhand der Darstellungen in der Fig. 8 erläutert werden.

Wie in der **Fig. 8a** dargestellt, wird zunächst ein gasdurchlässiges Trennmaterial 4, beispielsweise in Form eines Netzes, auf der Bodenplatte 3 angeordnet. Das Trennmaterial 4 kann derart angeordnet werden, dass es seitlich über die Bodenplatte 3 übersteht und an den Seitenwänden 2 anliegt.

In einem weiteren Schritt, der in der **Fig. 8b** gezeigt ist, wird eine Trennvorrichtung 12 in den Brennerkorb 1 eingebracht. Die Trennvorrichtung weist zumindest eine Trennwand auf, die den Innenbereich 7 von dem Außenbereich 6 des Brennerkorbs 1 trennt. Beispielsweise kann die Trennvorrichtung 12 nach Art eines zylindrischen Rohrs ausgebildet sein.

Nachdem die Trennvorrichtung 12 in den Brenner 10 eingebracht wurde, wird die Schüttung 5 in den Brennerkorb 1 des Brenners 10 eingebracht. Wie der **Fig. 8c** zu entnehmen, werden die Partikel 8, 9 der Schüttung 5 dabei derart angeordnet, dass die Schüttung 5 in dem Randbereich 6 des Brennerkorbs 1 einen größeren Strömungswiderstand aufweist als in einem Innenbereich 7 des Brennerkorbs 1. In den Randbereich 6 werden mehr Kleinpartikel 8 eingefüllt als Großpartikel 9. In den Innenbereich 7 werden mehr Großpartikel 9 als Kleinpartikel 8 eingebracht.

Nachdem Einbringen der Schüttung 5 in den Brennerkorb 1 wird die Trennvorrichtung 12 aus dem Brennerkorb 1 entfernt. Die Partikel 8,9 füllen den durch die Trennvorrichtung 12 freigegebenen Raum auf und es ergibt sich eine Anordnung wie sie in der **Fig. 1** dargestellt ist.

Abschließend kann ein Katalysatornetz auf die Schüttung 5 aufgelegt werden.

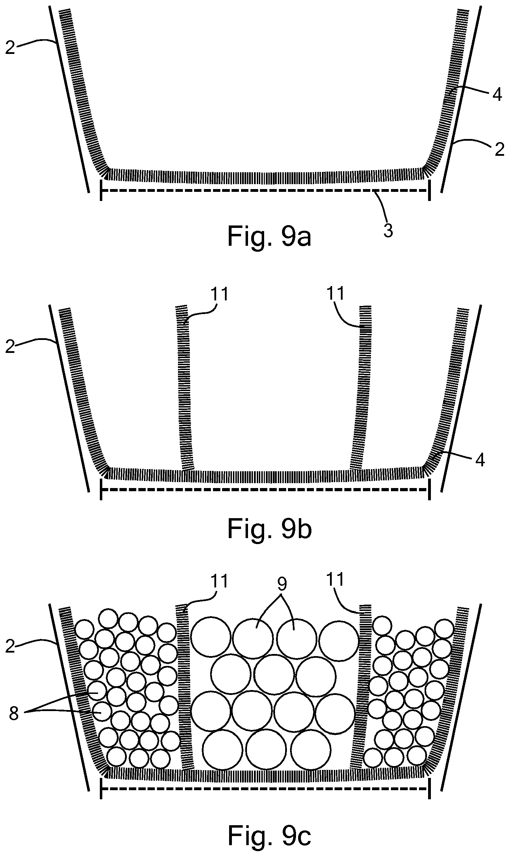

Eine weitere Ausgestaltung des erfindungsgemäßen Verfahrens wird im Folgenden anhand der Darstellung in **Fig. 9** beschrieben.

Wie in der **Fig. 9a** dargestellt, wird zunächst ein gasdurchlässiges Trennmaterial 4, beispielsweise in Form eines Netzes, auf der Bodenplatte 3 angeordnet. Das Trennmaterial 4 kann derart angeordnet werden, dass es seitlich über die Bodenplatte 3 übersteht und an den Seitenwänden 2 anliegt.

Die **Fig. 9b** zeigt, dass in einem nächsten Verfahrensschritt zumindest ein gasdurchlässiges Trennmaterial 11 im Bereich zwischen dem Randbereich 6 und dem Innenbereich 7 des Brennerkorbs 1 angeordnet wird. Das gasdurchlässige Trennmaterial 11 wird bevorzugt mit dem auf der Bodenplatte 3 aufliegenden gasdurchlässigen Trennmaterial 4 verbunden.

Nachdem das gasdurchlässige Trennmaterial 11 in den Brennerkorb 1 eingebracht wurde, wird die Schüttung 5 in den Brennerkorb 1 des Brenners 10 eingebracht. Wie der **Fig. 9c** zu entnehmen, werden die Partikel 8, 9 der Schüttung 5 dabei derart angeordnet, dass die Schüttung 5 in dem Randbereich 6 des Brennerkorbs 1 einen größeren Strömungswiderstand aufweist als in einem Innenbereich 7 des Brennerkorbs 1. In den Randbereich 6 werden mehr Kleinpartikel 8 eingefüllt als Großpartikel 9. In den Innenbereich 7 werden mehr Großpartikel 9 als Kleinpartikel 8 eingebracht.

Abschließend kann ein Katalysatornetz auf die Schüttung 5 aufgelegt werden.

Bei dem vorstehend beschriebenen Verfahren zur Anordnung einer aus Partikeln 8,9 bestehenden Schüttung 5 in einem von einem Gas durchströmbaren Brenner 10, insbesondere in einem Brennerkorb 1 eines Ammoniak-Oxidationsbrenners, werden die Partikel 8,9 derart angeordnet, dass die Schüttung 5 in einem Randbereich 6 des Brenners 10 einen größeren Strömungswiderstand aufweist als in einem Innenbereich 7 des Brenners 10. Hierdurch wird die Verbrennungseffizienz erhöhet und der Ammoniakschlupf reduziert.

### Bezugszeichenliste

- 1: Brennerkorb
- 2: Seitenwand
- 3: Bodenplatte
- 4: Trennmaterial
- 5: Schüttung
- 6: Randbereich
- 7: Innenbereich
- 8: Kleinpartikel
- 9: Großpartikel
- 10: Brenner
- 11: Trennmaterial
- 12: Trennvorrichtung

## Patentansprüche

1. Verfahren zur Anordnung einer aus Partikeln (8, 9) bestehenden Schüttung (5) in einem von einem Gas durchströmbaren Brennerkorb (1) eines Ammoniak-Oxidationsbrenners, wobei die Partikel (8,9) derart angeordnet werden, dass die Schüttung (5) in einem Randbereich (6) des Brenners (10) einen größeren Strömungswiderstand aufweist als in einem Innenbereich (7) des Brennerkorbs (1), **dadurch gekennzeichnet, dass** eine Trennvorrichtung (12) in den Brennerkorb (1), eingebracht wird, welche den Randbereich (6) von dem Innenbereich (7) trennt.

2. Verfahren nach Anspruch 1, **dadurch gekennzeichnet, dass** die Schüttung (5) im Randbereich (6) eine größere Schüttdichte aufweist als im Innenbereich (7).

3. Verfahren nach einem der vorhergehenden Ansprüche, **dadurch gekennzeichnet, dass** die Schüttung (5) Kleinpartikel (8) und Großpartikel (9) umfasst, wobei die Kleinpartikel (8) einen kleineren Durchmesser aufweisen als die Großpartikel (9).

4. Verfahren nach Anspruch 3, **dadurch gekennzeichnet, dass** die Kleinpartikel (8) einen Durchmesser im Bereich von 1 mm bis 10 mm, bevorzugt im Bereich von 2 mm bis 5 mm, aufweisen.

5. Verfahren nach einem der Ansprüche 3 oder 4, **dadurch gekennzeichnet, dass** die Großpartikel (9) einen Durchmesser im Bereich von 5 mm bis 50 mm, bevorzugt im Bereich von 10 mm bis 40 mm, besonders bevorzugt im Bereich von 20 mm bis 30 mm aufweisen.

6. Verfahren nach einem der Ansprüche 3 bis 5, **dadurch gekennzeichnet, dass** im Randbereich (6) mehr Kleinpartikel (8) als Großpartikel (9) angeordnet werden und/oder im Innenbereich (7) mehr Großpartikel (9) als Kleinpartikel (8) angeordnet werden.

7. Verfahren nach einem der Ansprüche 3 bis 5, **dadurch gekennzeichnet, dass** im Randbereich (6) mehr Kleinpartikel (9) als Großpartikel (8) angeordnet werden und im Innenbereich (7) zwei Schichten angeordnet werden, wobei die untere Schicht mehr Kleinpartikel (8) als Großpartikel (9) aufweist und die obere Schicht mehr Großpartikel (9) als Kleinpartikel (8) aufweist.

8. Verfahren nach einem der Ansprüche 3 bis 5, **dadurch gekennzeichnet, dass** im Randbereich (6) eine Mischung aus Kleinpartikeln (8) und Großpartikeln (9) angeordnet wird.

9. Verfahren nach einem der Ansprüche 3 bis 5 oder 8, **dadurch gekennzeichnet, dass** im Randbereich (6) übereinanderliegende Schichten aus Großpartikeln (9) und aus Kleinpartikeln (8) angeordnet werden.

10. Verfahren nach einem der vorhergehenden Ansprüche, **dadurch gekennzeichnet, dass** die Breite des Randbereichs (6) des Brennerkorbs (1) einen Wert im Bereich von 1% bis 6% des Durchmessers des Brennerkorbs (1) aufweist.

11. Verfahren nach einem der vorhergehenden Ansprüche, **dadurch gekennzeichnet, dass** auf einer Bodenplatte (3) eines Brennerkorbs (1), ein gasdurchlässiges Trennmaterial (4) angeordnet wird, auf welches die Schüttung (5) aufgebracht wird.

12. Verfahren nach einem der vorhergehenden Ansprüche, **dadurch gekennzeichnet, dass** zwischen den Randbereich (6) und den Innenbereich (7) ein gasdurchlässiges Trennmaterial (11), insbesondere ein Netz, eingebracht wird.

13. Verfahren nach einem der vorhergehenden Ansprüche, **dadurch gekennzeichnet, dass** der Randbereich (6) einen rechteckigen, insbesondere quadratischen, Querschnitt oder einen trapezförmigen Querschnitt aufweist.

14. Verfahren nach einem der vorhergehenden Ansprüche, **dadurch gekennzeichnet, dass** die Partikel (8,9) der Schüttung (5) einen Katalysator aufweisen und/oder als Füllkörper ausgebildet sind.

15. Brennerkorb für einen Ammoniak-Oxidationsbrenner, mit einer aus Partikeln (8, 9) bestehenden Schüttung (5), wobei die Partikel (8, 9) derart angeordnet sind, dass die Schüttung (5) in einem Randbereich (6) des Brennerkorbs (1) einen größeren Strömungswiderstand aufweist als in einem Innenbereich (7) des Brennerkorbs (1), **dadurch gekennzeichnet, dass** eine Trennvorrichtung (12) in den Brennerkorb (1), eingebracht ist, welche den Randbereich (6) von dem Innenbereich (7) trennt.

## Claims

1. Method for arranging a bed (5) consisting of particles (8, 9) in a burner basket (1) of an ammonia oxidation burner, through which basket a gas can flow, where the particles (8, 9) are arranged in such a way that the bed (5) has a greater flow resistance in a peripheral region (6) of the burner (10) than in an interior region (7) of the burner basket (1), **characterized in that** a separation device (12) which separates the peripheral region (6) from the interior region (7) is introduced into the burner basket (1).

2. Method according to Claim 1, **characterized in that** the bed (5) has a greater bulk density in the peripheral region (6) than in the interior region (7).

3. Method according to either of the preceding claims, **characterized in that** the bed (5) comprises small particles (8) and large particles (9), where the small particles (8) have a smaller diameter than the large particles (9).

4. Method according to Claim 3, **characterized in that** the small particles (8) have a diameter in the range from 1 mm to 10 mm, preferably in the range from 2 mm to 5 mm.

5. Method according to either of Claims 3 and 4, **characterized in that** the large particles (9) have a diameter in the range from 5 mm to 50 mm, preferably in the range from 10 mm to 40 mm, particularly preferably in the range from 20 mm to 30 mm.

6. Method according to any of Claims 3 to 5, **characterized in that** more small particles (8) than large particles (9) are arranged in the peripheral region (6) and/or more large particles (9) than small particles (8) are arranged in the interior region (7) .

7. Method according to any of Claims 3 to 5, **characterized in that** more small particles (9) than large particles (8) are arranged in the peripheral region (6) and two layers are arranged in the interior region (7), where the lower layer comprises more small particles (8) than large particles (9) and the upper layer comprises more large particles (9) than small particles (8).

8. Method according to any of Claims 3 to 5, **characterized in that** a mixture of small particles (8) and large particles (9) is arranged in the peripheral region (6).

9. Method according to any of Claims 3 to 5 or 8, **characterized in that** superposed layers of large particles (9) and of small particles (8) are arranged in the peripheral region (6).

10. Method according to any of the preceding claims, **characterized in that** the width of the peripheral region (6) of the burner basket (1) has a value in the range from 1% to 6% of the diameter of the burner basket (1).

11. Method according to any of the preceding claims, **characterized in that** a gas-permeable separating material (4), on which the bed (5) is installed, is arranged on a bottom plate (3) of a burner basket (1) .

12. Method according to any of the preceding claims, **characterized in that** a gas-permeable separating material (11), in particular a mesh, is introduced between the peripheral region (6) and the interior region (7).

13. Method according to any of the preceding claims, **characterized in that** the peripheral region (6) has a rectangular, in particular square, cross section or a trapezoidal cross section.

14. Method according to any of the preceding claims, **characterized in that** the particles (8, 9) of the bed (5) comprise a catalyst and/or are configured as packing elements.

15. Burner basket for an ammonia oxidation burner, comprising a bed (5) consisting of particles (8, 9), where the particles (8, 9) are arranged in such a way that the bed (5) has a greater flow resistance in a peripheral region (6) of the burner basket (1) than in an interior region (7) of the burner basket (1), **characterized in that** a separating device (12) which separates the peripheral region (6) from the interior region (7) is introduced into the burner basket (1).

## Revendications

1. Procédé permettant de disposer un lit (5), formé de particules (8, 9), dans un panier de brûleur (1), pouvant être traversé par un gaz, d'un brûleur à oxydation à l'ammoniac, les particules (8, 9) étant disposées de manière à ce que le lit (5) présente dans une région périphérique (6) du brûleur (10) une plus grande résistance à l'écoulement que dans une région intérieure (7) du panier de brûleur (1), **caractérisé en ce qu'**un dispositif de séparation (12), qui sépare la région périphérique (6) de la région intérieure (7), est introduit dans le panier de brûleur (1).

2. Procédé selon la revendication 1, **caractérisé en ce que** le lit (5) présente dans la région périphérique (6) une plus grande densité apparente que dans la région intérieure (7).

3. Procédé selon l'une des revendications précédentes, **caractérisé en ce que** le lit (5) comprend de petites particules (8) et de grosses particules (9), les petites particules (8) ayant un diamètre inférieur à celui des grosses particules (9).

4. Procédé selon la revendication 3, **caractérisé en ce que** les petites particules (8) ont un diamètre compris entre 1 et 10 mm, de préférence entre 2 et 5 mm.

5. Procédé selon l'une des revendications 3 ou 4, **caractérisé en ce que** les grosses particules (9) ont un diamètre compris entre 5 et 50 mm, de préférence entre 10 et 40 mm, de manière particulièrement préférée entre 20 et 30 mm.

6. Procédé selon l'une des revendications 3 à 5, **caractérisé en ce que** la région périphérique (6) comporte davantage de petites particules (8) que de grosses particules (9) et/ou la région intérieure (7) comporte davantage de grosses particules (9) que de petites particules (8).

7. Procédé selon l'une des revendications 3 à 5, **caractérisé en ce que** la région périphérique (6) comporte davantage de petites particules (9) que de grosses particules (8) et la région intérieure (7) comporte deux couches, la couche inférieure comportant davantage de petites particules (8) que de grosses particules (9) et la couche supérieure comportant davantage de grosses particules (9) que de petites particules (8).

8. Procédé selon l'une des revendications 3 à 5, **caractérisé en ce que** la région périphérique (6) comporte un mélange de petites particules (8) et de grosses particules (9).

9. Procédé selon l'une des revendications 3 à 5 ou 8, **caractérisé en ce que** la région périphérique (6) comporte des couches superposées de grosses particules (9) et de petites particules (8).

10. Procédé selon l'une des revendications précédentes, **caractérisé en ce que** la largeur de la région périphérique (6) du panier de brûleur (1) a une valeur dans la gamme de 1 % à 6 % du diamètre du panier de brûleur (1).

11. Procédé selon l'une des revendications précédentes, **caractérisé en ce qu'**un matériau de séparation (4) perméable aux gaz, sur lequel est déposé le lit (5), est disposé sur une plaque de fond (3) d'un panier de brûleur (1).

12. Procédé selon l'une des revendications précédentes, **caractérisé en ce qu'**un matériau de séparation (11) perméable aux gaz, en particulier un filet, est introduit entre la région périphérique (6) et la région intérieure (7).

13. Procédé selon l'une des revendications précédentes, **caractérisé en ce que** la région périphérique (6) a une section transversale rectangulaire, notamment carrée ou trapézoïdale.

14. Procédé selon l'une des revendications précédentes, **caractérisé en ce que** les particules (8,9) du lit (5) comportent un catalyseur et/ou sont conçues comme un corps de remplissage.

15. Panier de brûleur, destiné à un brûleur à oxydation à l'ammoniac, comprenant un lit (5) formé de particules (8, 9), les particules (8, 9) étant disposées de manière à ce que le lit (5) présente dans une région périphérique (6) du panier de brûleur (1) une plus grande résistance à l'écoulement que dans une région intérieure (7) du panier de brûleur (1), **caractérisé en ce qu'**un dispositif de séparation (12), qui sépare la région périphérique (6) de la région intérieure (7), est introduit dans le panier de brûleur (1) .
